# EUROPEAN PATENT SPECIFICATION

(11) **EP 2 875 218 B1**
(45) Date of publication and mention of the grant of the patent: **02.05.2018**
(21) Application number: 13812617.2
(22) Date of filing: 04.07.2013
(51) Int. Cl.: F01N 3/20, F01N 9/00

(54) **SCR SYSTEM AND METHOD FOR PURIFYING EXHAUST GASES IN A SCR SYSTEM**
SCR-SYSTEM UND VERFAHREN ZUR REINIGUNG VON ABGASEN IN EINEM SCR-SYSTEM
SYSTÈME DE RÉDUCTION CATALYTIQUE SÉLECTIVE ET PROCÉDÉ POUR PURIFIER DES GAZ D'ÉCHAPPEMENT DANS UN SYSTÈME DE RÉDUCTION CATALYTIQUE SÉLECTIVE

(30) Priority: 05.07.2012 SE 1250771
(43) Date of publication of application: 27.05.2015
(73) Proprietor: Scania CV AB, 151 87 Södertälje (SE)
(72) Inventor: ELIASSEN, Torbjörn, S-151 48 Södertälje (SE)
(74) Representative: Scania CV AB
(86) International application number: PCT/SE2013/050871
(87) International publication number: WO 2014/007752

(56) References cited:
- WO-A1-2011/139971
- DE-A1-102006 027 357
- DE-A1-102006 027 357
- US-A1- 2005 282 285
- US-A1- 2011 023 463
- US-A1- 2011 023 463
- US-A1- 2011 041 480
- US-A1- 2011 041 480

## Description

### TECHNICAL FIELD

The present invention relates to a method for, by means of a reducing agent, purifying exhaust gases in an exhaust gas flow from an engine in an SCR system. The invention relates also to a computer programme product containing program code for a computer for implementing a method according to the invention. The invention relates also to an SCR system and a vehicle which is equipped with the SCR system.

### BACKGROUND

Vehicles today use, for example, urea as reductant in SCR (selective catalytic reduction) systems which comprise an SCR catalyst, in which catalyst said reductant and NOₓ gas can react and be converted to nitrogen gas and water. Various types of reductants may be used in SCR systems. AdBlue is an example of a commonly used reductant.

One type of SCR system comprises a container for a reductant. The SCR system may also have a pump adapted to drawing said reductant from the container via a suction hose and to supplying it via a pressure hose to a dosing unit situated adjacent to an exhaust system of the vehicle, e.g. adjacent to an exhaust pipe of the exhaust system. The dosing unit is adapted to injecting a necessary amount of reductant into the exhaust pipe upstream of the SCR catalyst according to operating routines stored in a control unit of the vehicle. To make it easier to regulate the pressure when no or only small amounts are being dosed, the system also comprises a return hose which runs back from a pressure side of the system to the container.

There are today SCR systems which comprise two in a series arranged SCR catalysts. There is a continuous demand of improving performance of SCR systems in general.

US 20110023463 describes a method and a device for controlling an exhaust gas system having more than one SCR region. The dosing of an amount injected reducing agent is controlled on the basis of a state of the first or the second SCR region, for example quantity of stored reducing agent.

DE 102006027357 describes a method for operating an SCR catalyst and an exhaust gas arrangement. The method relates to that the storing capacity of the first SCR catalyst is the dimensioned size to control the amount of reducing agent which should be injected in the exhaust gas arrangement.

US 20110041480 describes an exhaust gas purifying device for a combustion engine where an ammonia slip being larger than 0 always should be achieved after a first SCR catalyst.

WO 2011139971 describes an ammonia sensor control having a NOₓ feedback. Said control will achieve a certain level of ammonia slip between a first SCR catalyst and a second SCR catalyst.

### SUMMARY OF THE INVENTION

An object of the present invention is to propose a novel and advantageous method for, by means of a reducing agent, purifying exhaust gases in an exhaust gas flow from an engine in an SCR system.

Another object of the invention is to propose a novel and advantageous SCR system and a novel and advantageous computer programme for, by means of a reducing agent, purifying exhaust gases in an exhaust gas flow from an engine in an SCR system.

Yet another object of the invention is to propose a method, an SCR system and a computer programme for achieving an improved purification of exhaust gases from a combustion engine.

Yet another object of the invention is to provide an alternative method, an alternative SCR system and an alternative computer programme for achieving a purification of exhaust gases from a combustion engine.

These objects are achieved with a method for, by means of a reducing agent, purifying exhaust gases in a exhaust gas flow from an engine in an SCR system comprising two SCR catalyst configurations arranged in series in said exhaust gas flow according to claim 1.

According to aspect of the invention there is provided a method for, by means of a reducing agent, purifying exhaust gas in an exhaust gas flow from an engine in an SCR system comprising two SCR catalyst configurations, comprising a first SCR catalyst configuration and a second SCR catalyst configuration arranged in series in said exhaust gas flow, wherein said second SCR catalyst configuration is arranged downstream of said first catalyst configuration, comprising the steps of:
- continuously determining a content of ammonia in said exhaust gas at a position downstream of said first SCR catalyst configuration and upstream of said second catalyst configuration, and
- continuously determining a content of NOₓ in said exhaust gas downstream of said second SCR catalyst configuration;
- performing said purifying partly in a first state comprising evident overdosing of said reducing agent in said first SCR catalyst configuration and partly in a second state comprising evident underdosing of said reducing agent in said first SCR catalyst configuration, wherein the expressions overdosing and underdosing relate to a dosed amount reducing agent leading to a stoichiometric relationship between ammonia and NOₓ in said exhaust gas which is larger than 1 and lesser than 1, respectively; and
- shifting between said first state and said second state, wherein a shift from first said state to said second state is performed on the basis of said determined content of ammonia in the exhaust gas and wherein a shift from said second state to said first state is performed on the basis of said determined content of NOₓ in said exhaust gas.

According to an aspect of the invention there is provided a method for, by means of a reducing agent, purifying exhaust gas in an exhaust gas flow from an engine in an SCR system comprising two SCR catalyst configurations arranged in series in said exhaust gas flow, comprising the steps of:
- continuously determining a content of ammonia in said exhaust gas downstream of a first SCR catalyst configuration;
- continuously determining a content of NOₓ in said exhaust gas downstream of a second SCR catalyst configuration, which is arranged downstream of said first SCR catalyst configuration;
- performing said purifying partly in a first state comprising evident overdosing of said reducing agent in said first SCR catalyst configuration and partly in a second state comprising evident underdosing of said reducing agent in said first SCR catalyst configuration; and
- shifting between said first state and said second state on the basis of said determined content of ammonia and said content of NOₓ in said exhaust gas.

The method of dosing according to said first state and thereafter according to said second state, and thereafter shifting back, makes the invention robust against faults in reported NOₓ flows, and faults regarding exhaust gas leakage and concentration of reducing agent.

According to one aspect of the invention feedback from two sensors are used and thus no mapping/modelling of a control unit of the vehicle is needed.

One exception is however a simple NH₃ storage capacity model as function of temperature.

According to an aspect of the invention all dosed reducing agent (ammonia) is used for reduction of NOₓ, which is advantageous from a perspective of economics.

Use of vanadium SCR catalysts make the SCR system robust against higher contents of sulphur in diesel fuel which is commonly used in some countries.

The inventive concept provides very low N₂O emissions due to absence of an otherwise desired ammonia slip catalyst (ASC), use of vanadium in the SCR catalysts and a DOC (Diesel Oxidation Catalyst) which may comprise a content of NO₂ below 50%.

The method may comprise the step of:
- performing said purifying in a third state, wherein the dosing of said reducing agent in said first SCR catalyst configuration is between said overdosing and said underdosing.

The method may comprise the step of:
- performing said purifying in a third state, wherein the dosing of said reducing agent in said first SCR catalyst configuration is between said overdosing and said underdosing, wherein the dosing of reducing agent may be based on a content of NOₓ in the exhaust gases upstream of said first SCR catalyst configuration.

The method may comprise the step of:
- performing said purifying in a fourth state, wherein said dosing of said reducing agent in said first SCR catalyst configuration corresponds to an extreme underdosing, wherein extreme underdosing corresponds to an stoichiometric relationship between ammonia and NOₓ in said exhaust gas which is substantially equal to 0.

The method may comprise the step of:
- performing said purifying in a fourth state, wherein said dosing of said reducing agent in said first SCR catalyst configuration corresponds to an extreme underdosing.

The method may comprise the step of:
- shifting from said first state to said second state when said determined content of ammonia downstream of said first SCR catalyst configuration exceeds a first threshold value.

The method may comprise the step of:
- shifting from said second state to said first state when said determined content of NOₓ in said exhaust gas downstream of said second SCR catalyst configuration exceeds a predetermined value.

The method may comprise the steps of:
- continuously determining an increase rate of the content of NOₓ in said exhaust gas downstream of said second SCR catalyst configuration; and
- shifting from said second state to said first state when said increase rate of the content of NOₓ exceeds a predetermined threshold value.

The method may comprise the steps of:
- continuously determining an increase rate of the content of ammonia in said exhaust gas; and
- shifting from said first state to said second state when said increase rate of the content of ammonia exceeds a predetermined third threshold value downstream of said first SCR catalyst configuration.

The method may comprise the steps of:
- continuously determining an increase rate of the content of ammonia in said exhaust gas; and
- shifting from said first state to said fourth state when said increase rate of the content of ammonia exceeds a predetermined fourth threshold value downstream of said first SCR catalyst configuration.

The method may comprise the steps of:
- continuously determining an increase rate of the content of ammonia in said exhaust gas; and
- shifting from said second state to said fourth state when said increase rate of the content of ammonia exceeds a predetermined fourth threshold value downstream of said first SCR catalyst configuration.

The method may comprise the steps of:
- continuously determining an increase rate of the content of ammonia in said exhaust gas; and
- shifting from said third state to said fourth state when said increase rate of the content of ammonia exceeds a predetermined fourth threshold value downstream of said first SCR catalyst configuration.

The method may comprise the steps of:
- continuously determining an increase rate of the content of ammonia in said exhaust gas; and
- shifting from said third state to said second state when said increase rate of the content of ammonia exceeds a predetermined third threshold value downstream of said first SCR catalyst configuration.

By paying regard to the increase rate of said content of ammonia in said exhaust gas instead of an absolute value of said content of ammonia in the exhaust gas the SCR system may be controlled also when said ammonia sensor is associated with a gain- or offset error resulting in that measured absolute values are not correct.

The method may comprise the step of:
- shifting from said second state to said fourth state when said determined content of ammonia in said exhaust gas downstream of said first SCR catalyst configuration exceeds a second threshold value, which is considerably exceeding said first threshold value.

The method may comprise the step of:
- shifting from said first state to said fourth state when said determined content of ammonia in said exhaust gas downstream of said first SCR catalyst configuration exceeds a second threshold value, which is considerably exceeding said first threshold value.

The method may comprise the step of:
- shifting from said third state to said second state when said determined content of ammonia in said exhaust gas downstream of said first SCR catalyst configuration exceeds said first threshold value.

The method may comprise the step of:
- shifting from said third state to said first state when said determined content of NOₓ in said exhaust gas downstream of said second SCR catalyst configuration exceeds said predetermined value.

The method may comprise the step of:
- continuously determine an increase rate of the content of NOₓ in said exhaust gas downstream of said second SCR catalyst configuration; and
- shifting from said third state to said first state when said increase rate of the content of NOₓ exceeds a predetermined value.

The method may comprise the step of:
- shifting from said fourth state to said first state when said determined content of NOₓ in said exhaust gas downstream of said second SCR catalyst configuration exceeds a predetermined value. Said predetermined value may be predetermined threshold value. Said predetermined value may be e.g. 10ppm.

The method may comprise the step of:
- continuously determine an increase rate of the content of NOₓ in said exhaust gas downstream of said second SCR catalyst configuration; and
- shifting from said fourth state to said first state when said increase rate of the content of NOₓ exceeds a predetermined threshold value.

The method may comprise the step of:
- shifting from said third state to said fourth state when said determined content of ammonia in said exhaust gas downstream of said first SCR catalyst configuration exceeds a second threshold value. Said second threshold value may considerably exceed said first threshold value. Said second threshold value may be predetermined threshold value. Said second threshold value may be e.g. 100ppm.

The method may comprise the step of:
- shifting from said first state to said third state when said determined content of ammonia downstream of said first SCR catalyst configuration is a below said first threshold value and said determined content of NOₓ downstream of said second SCR catalyst configuration is lower than said predetermined value and a certain degree of coverage of ammonia has been achieved for said first SCR catalyst configuration.

Software comprising programme code pertaining to purifying exhaust gases from an engine is easy to update or replace. Moreover, different parts of the software containing programme code for purifying exhaust gases from an engine may be replaced independently of one another. This modular configuration is advantageous from a maintenance perspective.

According to an aspect of the invention there is provided an SCR system for, by means of a reducing agent, purifying exhaust gas in an exhaust gas flow from an engine in an SCR system comprising two SCR catalyst configurations, comprising a first SCR catalyst configuration and a second SCR catalyst configuration arranged in series in said exhaust gas flow, wherein said second SCR catalyst configuration is arranged downstream of said first catalyst configuration, comprising:
- means for continuously determining a content of ammonia in said exhaust gas at a position downstream of said first SCR catalyst configuration and upstream of said second catalyst configuration, and
- means for continuously determining a content of NOₓ in said exhaust gas downstream of said second SCR catalyst configuration,
- means for performing said purifying partly in a first state comprising evident overdosing of said reducing agent in said first SCR catalyst configuration and partly in a second state comprising evident underdosing of said reducing agent in said first SCR catalyst configuration, wherein the expressions overdosing and underdosing relate to a dosed amount reducing agent leading to a stoichiometric relationship between ammonia and NOₓ in said exhaust gas which is larger than 1 and lesser than 1, respectively; and
- means for shifting between said first state and said second state, wherein a shift from first said state to said second state is performed on the basis of said determined content of ammonia in said exhaust gas and wherein a shift from said second state to said first state is performed on the basis of said determined content of NOₓ in said exhaust gas.

According to an aspect of the invention there is provided an SCR system for, by means of a reducing agent, purifying exhaust gas in an exhaust gas flow from an engine in an SCR system comprising two SCR catalyst configurations arranged in series in said exhaust gas flow, comprising:
- means for continuously determining a content of ammonia in said exhaust gas downstream of a first SCR catalyst configuration,
- means for continuously determining a content of NOₓ in said exhaust gas downstream of said second SCR catalyst configuration, which is arranged downstream of said first SCR catalyst configuration;
- means for performing said purifying partly in a first state comprising evident overdosing of said reducing agent in said first SCR catalyst configuration and partly in a second state comprising evident underdosing of said reducing agent in said first SCR catalyst configuration; and
- means for shifting between said first state and said second state on the basis of said determined content of ammonia said determined content of NOₓ in said exhaust gas.

Said means for continuously determining a content of ammonia downstream of said first SCR catalyst configuration may comprise an ammonia sensor.

Said means for continuously determining a content of ammonia downstream of said first SCR catalyst configuration may comprise a NOₓ sensor.

The SCR system may comprise:
- means for performing said purifying in a third state, wherein the dosing of said reducing agent in said first SCR catalyst configuration is between said overdosing and said underdosing.

The SCR system may comprise:
- means for performing said purifying in a third state, wherein the dosing of said reducing agent in said first SCR catalyst configuration is between said overdosing and said underdosing, wherein the dosing of reducing agent may be based on a content of NOₓ in the exhaust gases upstream of said first SCR catalyst configuration.

The SCR system may comprise:
- means for performing said purifying in a fourth state, wherein said dosing of said reducing agent in said first SCR catalyst configuration corresponds to an extreme underdosing, wherein extreme underdosing corresponds to an stoichiometric relationship between ammonia and NOₓ in said exhaust gas which is substantially equal to 0.

The SCR system may comprise:
- means for performing said purifying in a fourth state, wherein said dosing of said reducing agent in said first SCR catalyst configuration corresponds to an extreme underdosing.

The SCR system may comprise:
- means for shifting from said first state to said second state when said determined content of ammonia downstream of said first SCR catalyst configuration exceeds a first threshold value.

The SCR system may comprise:
- means for shifting from said second state to said first state when said determined content of NOₓ in said exhaust gas downstream of said second SCR catalyst configuration exceeds a predetermined value.

The SCR system may comprise:
- means for shifting from said second state to said fourth state when said determined content of ammonia in said exhaust gas downstream of said first SCR catalyst configuration exceeds a second threshold value, which is considerably exceeding said first threshold value.

The SCR system may comprise:
- shifting from said first state to said fourth state when said determined content of ammonia in said exhaust gas downstream of said first SCR catalyst configuration exceeds a second threshold value, which is considerably exceeding said first threshold value.

The SCR system may comprise:
- means for shifting from said fourth state to said first state when said determined content of NOₓ in said exhaust gas downstream of said second SCR catalyst configuration exceeds a predetermined value. Said predetermined value may be predetermined threshold value. Said predetermined value may be e.g. 10ppm.

The SCR system may comprise:
- means for shifting from said third state to said fourth state when said determined content of ammonia in said exhaust gas downstream of said first SCR catalyst configuration exceeds a second threshold value. Said second threshold value may considerably exceed said first threshold value. Said second threshold value may be predetermined threshold value. Said second threshold value may be e.g. 100ppm.

The SCR system may comprise:
- means for shifting from said third state to said second state when said determined content of ammonia in said exhaust gas downstream of said first SCR catalyst configuration exceeds said first threshold value.

The SCR system may comprise:
- means for shifting from said third state to said first state when said determined content of ammonia in said exhaust gas downstream of said second SCR catalyst configuration exceeds said predetermined value.

The SCR system may comprise:
- means for determining a degree of coverage of ammonia of said first SCR catalyst configuration; and
- means for shifting from said first state to said third state when said determined content of ammonia downstream of said first SCR catalyst configuration is below a first threshold value and said determined content of NOₓ downstream of said second SCR catalyst configuration is below a predetermined value and a certain degree of coverage of ammonia has been achieved for said first SCR catalyst configuration.

The SCR system may comprise:
- means for continuously determining an increase rate of the content of ammonia in said exhaust gas; and
- means for shifting from said first state to said second state when said increase rate of the content of ammonia exceeds a predetermined third threshold value downstream of said first SCR catalyst configuration.

The SCR system may comprise:
- means for continuously determining an increase rate of the content of ammonia in said exhaust gas; and
- means for shifting from said first state to said fourth state when said increase rate of the content of ammonia exceeds a predetermined fourth threshold value downstream of said first SCR catalyst configuration.

The SCR system may comprise:
- means for continuously determining an increase rate of the content of ammonia in said exhaust gas; and
- means for shifting from said second state to said fourth state when said increase rate of the content of ammonia exceeds a predetermined fourth threshold value downstream of said first SCR catalyst configuration.

The SCR system may comprise:
- means for continuously determining an increase rate of the content of ammonia in said exhaust gas; and
- means for shifting from said third state to said fourth state when said increase rate of the content of ammonia exceeds a predetermined fourth threshold value downstream of said first SCR catalyst configuration.

The SCR system may comprise:
- means for continuously determining an increase rate of the content of ammonia in said exhaust gas; and
- means for shifting from said third state to said second state when said increase rate of the content of ammonia exceeds a predetermined third threshold value downstream of said first SCR catalyst configuration

The SCR system may comprise:
- means for continuously determining an increase rate of the content of NOₓ in said exhaust gas downstream of said second SCR catalyst configuration; and
- means for shifting from said second state to said first state when said increase rate of the content of NOₓ exceeds a predetermined threshold value.

The SCR system may comprise:
- means for continuously determining an increase rate of the content of NOₓ in said exhaust gas downstream of said second SCR catalyst configuration; and
- means for shifting from said third state to said first state when said increase rate of the content of NOₓ exceeds a predetermined threshold value.

The SCR system may comprise:
- means for continuously determining an increase rate of the content of NOₓ in said exhaust gas downstream of said second SCR catalyst configuration; and
- means for shifting from said fourth state to said first state when said increase rate of the content of NOₓ exceeds a predetermined threshold value.

The SCR system may comprise:
- means for shifting from said first state to said third state when said determined content of ammonia downstream of said first SCR catalyst configuration is a below a first threshold value and said content of NOₓ downstream of said second SCR catalyst configuration is lower than said predetermined value and a certain degree of coverage of ammonia has been achieved for said first SCR catalyst configuration.

Said first SCR catalyst configuration may comprise an SCR catalyst device and a filter coated with an SCR coating.

Said second SCR catalyst configuration may comprise an SCR catalyst device and an ammonia slip catalyst.

At least one of said first SCR catalyst configuration and said second SCR catalyst configuration may comprise a vanadium substrate.

The above objects are also achieved with a motor vehicle comprising the SCR system. The motor vehicle may be a truck, bus or passenger car.

According to an aspect of the invention there is provided a computer programme for controlling a, by means of a reducing agent, purifying process of exhaust gas in an exhaust gas flow from an engine in an SCR system comprising two SCR catalyst configurations arranged in series in said exhaust gas flow, wherein said computer program comprises programme code for causing an electronic control unit or another computer connected to the electronic control unit to perform the steps according to any of the claims 1-11.

According to an aspect of the invention there is provided a computer programme for, by means of a reducing agent, purifying exhaust gas in an exhaust gas flow from an engine in an SCR system comprising two SCR catalyst configurations arranged in series in said exhaust gas flow, wherein said computer program comprises programme code stored on a computer-readable medium for causing an electronic control unit or another computer connected to the electronic control unit to perform the steps according to any of the claims 1-11.

According to an aspect of the invention there is provided a computer programme for controlling, by means of a reducing agent, a purifying process of exhaust gas in an exhaust gas flow from an engine in an SCR system comprising two SCR catalyst configurations arranged in series in said exhaust gas flow, wherein said computer program comprises programme code stored on a computer-readable medium for causing an electronic control unit or another computer connected to the electronic control unit to perform the steps according to any of the claims 1-11.

According to an aspect of the invention there is provided a computer programme for, by means of a reducing agent, purifying exhaust gas in an exhaust gas flow from an engine in an SCR system comprising two SCR catalyst configurations arranged in series in said exhaust gas flow, wherein said computer program comprises programme for causing an electronic control unit or another computer connected to the electronic control unit to perform the steps according to any of the claims 1-11.

According to an aspect of the invention there is provided a computer programme product containing a programme code stored on a computer-readable medium for performing method steps according to any of claims 1-11, when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Figure 1 illustrates schematically a vehicle according to an embodiment of the invention;
Figure 2a illustrates schematically a subsystem for the vehicle depicted in Figure 1, according to an embodiment of the invention;
Figure 2b illustrates schematically a subsystem for the vehicle depicted in Figure 1, according to an embodiment of the invention;
Figure 3 illustrates schematically a state diagram according to an aspect of the invention;
Figure 4a is a schematic flowchart of a method according to an embodiment of the invention;
Figure 4b is a more detailed schematic flowchart of a method according to an embodiment of the invention; and
Figure 5 illustrates schematically a computer according to an embodiment of the invention.

### DETAILED DESCRIPTION OF THE DRAWINGS

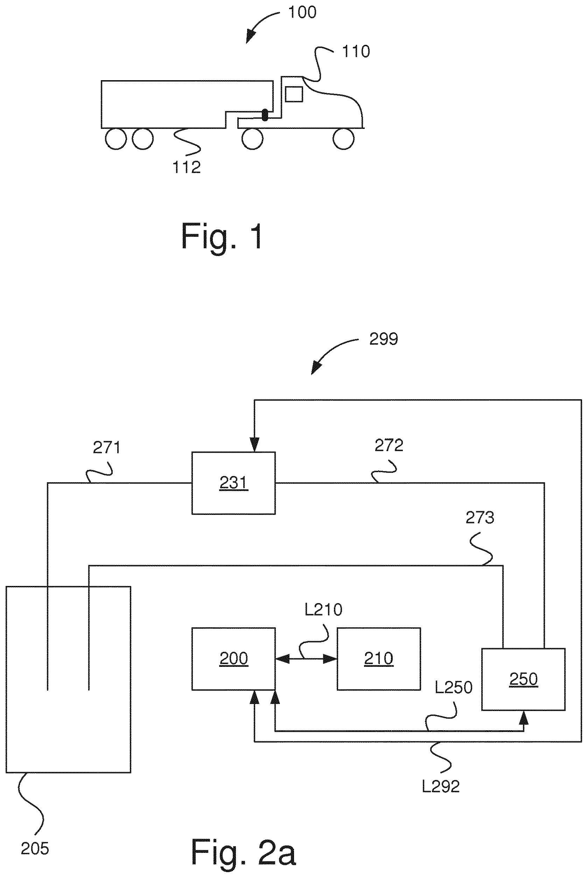

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

It should be noted that the invention is applicable to any suitable SCR system and is therefore not restricted to SCR systems of motor vehicles. The innovative method pertaining to an SCR system and the innovative SCR system according to an aspect of the invention are well suited to other platforms which have an SCR system than motor vehicles, e.g. watercraft. The watercraft may be of any kind, e.g. motorboats, steamers, ferries or ships.

The innovative method and the innovative SCR system according to an aspect of the invention are also well suited to e.g. systems comprising industrial engines and/or engine operating industrial robots.

The innovative method and the innovative SCR system according to an aspect of the invention are also well suited to various kinds of power plants, e.g. an electric power plant comprising a diesel generator.

The innovative method and the innovative SCR system are well suited to any engine system which comprises an engine, e.g. on a locomotive or some other platform.

The innovative method and the innovative SCR system are well suited to any system which comprises a NOₓ generator.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any suitable size. The line may be made of any suitable material, e.g. plastic, rubber or metal.

The term "reductant" or "reducing agent" refers herein to an agent used for reacting with certain emissions in an SCR system. These emissions may for example be NOₓ gas. The terms "reductant" and "reducing agent" are herein used synonymously. Said reductant according to a version is so-called AdBlue. Other kinds of reductants may of course be used. AdBlue is herein cited as an example of a reductant, but specialists will appreciate that the innovative method and the innovative SCR system are feasible with other types of reductants, subject to necessary adaptations, e.g. in control algorithms for executing software code in accordance with the innovative method.

Herein is depicted that detection of ammonia contents is used according to the innovative method. It should be noted that also other reducing agents may be used in a corresponding way.

It should be noted that by determining the size of exhaust gas flow and content of a gas emission is possible to calculate a mass flow or volume flow of said gas emission. According to the invention the suggested dosing strategy may be controlled on the basis of a mass flow or volume flow of ammonia and NOₓ. It is also possible to control dosing on the basis of ammonia and NOₓ given in the unit [g/kWh]. Herein the notion "content" which for example may be measured in ppm may be used but above mentioned parameters and units may alternatively be used according to the innovative method.

Figure 2a depicts a subsystem 299 of the vehicle 100. The subsystem 299 is situated in the tractor unit 110. The subsystem 299 may be part of an SCR system. The subsystem 299 comprises in this example a container 205 arranged to hold a reductant. The container 205 is adapted to containing a suitable amount of reductant and to being replenishable as necessary. The container might accommodate, for example, 75 or 50 litres of reductant.

A first line 271 is adapted to leading the reductant to a pump 231 from the container 205. The pump 231 may be any suitable pump. The pump 231 is adapted to being driven by an electric motor. The pump 231 is adapted to drawing the reductant from the container 205 via the first line 271 and supplying it via a second line 272 to a dosing unit 250. The dosing unit 250 comprises an electrically controlled dosing valve by means of which an outflow of added reductant can be controlled. The pump 231 is adapted to pressurising the reductant in the second line 272. The dosing unit 250 is provided with a throttle unit against which said pressure of the reductant is built up in the subsystem 299.

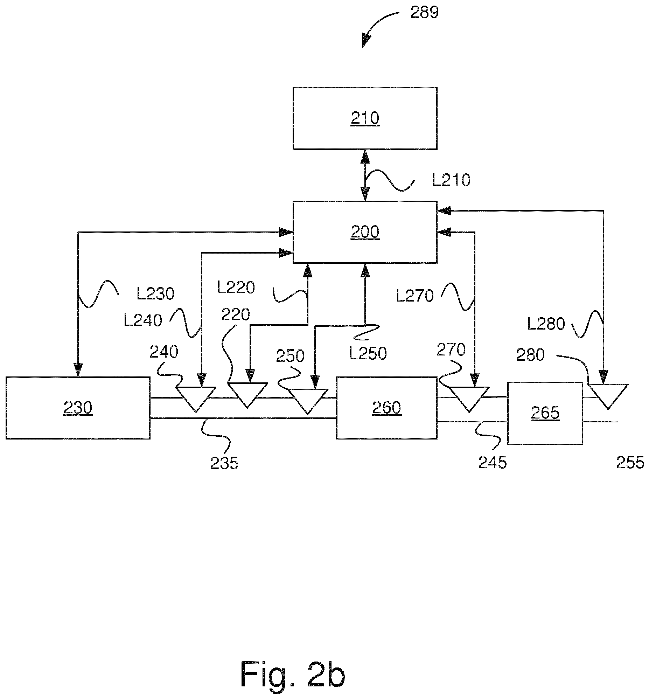

The dosing unit 250 is adapted to supplying said reductant to an exhaust system (see Fig. 2b) of the vehicle 100. More specifically, the dosing unit 250 is adapted to supplying a suitable amount of reductant in a controlled way to an exhaust system of the vehicle 100. According to this version, an SCR catalyst (not depicted) is situated downstream of a location in the exhaust system where the reductant supply is affected. The amount of reductant supplied in the exhaust system is intended to be used in order to reduce the amount of undesirable emissions in a known way.

The dosing unit 250 is arranged at for example an exhaust pipe which is arranged to convey exhaust gases from a combustion engine (see Figure 2b) of the vehicle 100 to the SCR catalyst.

A third line 273 runs between the dosing unit 250 and the container 205. The third line 273 is adapted to leading back to the container 205 a certain amount of the reductant fed to the dosing unit 250. This configuration achieves with advantage cooling of the dosing unit 250. The dosing unit 250 is thus cooled by a flow of the reductant as it is pumped through the dosing unit 250 from the pump 231 to the container 205.

The first control unit 200 is arranged for communication with the pump 231 via a link L292. The first control unit 200 is adapted to controlling operation of the pump 231 in order for example to regulate the reductant flows within the subsystem 299.

The first control unit 200 is adapted to controlling an operating power of the pump 231 by regulating the associated electric motor.

The first control unit 200 is arranged for communication with the dosing unit 250 via a link L250. The first control unit 200 is adapted to controlling operation of the dosing unit 250 in order for example to regulate the reductant supply to the exhaust system of the vehicle 100. According to an example the first control unit 200 is adapted to controlling operation of the dosing unit 250 in order for example to regulate the reductant return supply to the container 205.

A second control unit 210 is arranged for communication with the first control unit 200 via a link L210. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200 such as for example perform purifying partly in a first state comprising evident overdosing of said reducing agent in said first SCR catalyst configuration and partly in a second state comprising evident underdosing of said reducing agent in said first SCR catalyst configuration and to shift between said first state and said second state on the basis of the thus determined content ammonia and NOₓ in the exhaust gases. The innovative method may be performed by the first control unit 200 or the second control unit 210 or by both the first control unit 200 and the second control unit 210.

Figure 2b schematically illustrates a subsystem 289 of the vehicle 100 which is shown in Figure 1 according to an embodiment of the invention. The subsystem 289 may constitute a part of the innovative SCR system.

A combustion engine 230 is during operation causing an exhaust gas flow which is conveyed via a first passage 235 to a first SCR catalyst configuration 260. Said first SCR catalyst configuration 260 comprises an SCR catalyst. A second passage 245 is arranged to convey exhaust gases from said first SCR catalyst configuration 260 to a second SCR catalyst configuration 265.

The first control unit is arranged for communication with the engine 230 via a link L230. The first control unit 200 is arranged to control operation of the engine 230 according to stored operation routines.

The first control unit 200 is arranged to control operation of the dosing unit 250 for dosing reducing agent into the first passage 235.

A first NOₓ sensor 240 is arranged upstream of said first SCR catalyst configuration 260 at said first passage 235. Said first NOₓ sensor 240 is arranged for communication with the first control unit 200 via a link L240. The first NOₓ sensor 240 is arranged to continuously determining a prevailing content of NOₓ in the first passage 235. The first NOₓ sensor 240 is arranged to continuously send signals comprising information about a prevailing content of NOₓ to the first control unit 200 via the link L240.

According to an embodiment a content of NOₓ of exhaust gases from an engine of the vehicle may be calculated according to a in the first control unit 200 stored model. According to an embodiment of the present invention the first NOₓ sensor 240 could be removed from the SCR system and be replaced by said stored calculation model.

A second passage 245 is arranged to convey exhaust gases to a second SCR catalyst configuration 265 from said first SCR catalyst configuration 260.

A second NOₓ sensor 280 is arranged downstream of said second SCR catalyst configuration 265 at said third passage 255. Said second NOₓ sensor 280 is arranged for communication with the first control unit 200 via a link L280. The second NOₓ sensor 280 is arranged to continuously determining a prevailing content of NOₓ in the third passage 255. The second NOₓ sensor 280 is arranged to continuously send signals comprising information about a prevailing content of NOₓ to the first control unit 200 via the link L280.

An ammonia sensor 270 is arranged downstream of said first SCR catalyst configuration 260 at said second passage 245. Said ammonia sensor 270 is arranged for communication with the first control unit 200 via a link L270. The ammonia sensor 270 is arranged to continuously determining a prevailing content of NH₃ in the second passage 245. The ammonia sensor 270 is arranged to continuously send signals comprising information about a prevailing content of NH₃ to the first control unit 200 via the link L270.

According to an embodiment said ammonia sensor 270 may be replaced by a NOₓ sensor which is arranged downstream of said first SCR catalyst configuration 260 at said second passage 245. Said NOₓ sensor is arranged for communication with the first control unit 200 via a suitable link. Said NOₓ sensor is arranged to continuously determining a prevailing content of NOₓ in the second passage 245. Said NOₓ sensor is arranged to continuously send signals comprising information about a prevailing content of NOₓ to the first control unit 200 via said link. Hereby is the first control unit 200 arranged to calculate an ammonia content according to stored routines. The first control unit 200 is arranged to continuously determining a prevailing ammonia content on the basis of information about content of NOₓ downstream of said first SCR catalyst configuration 260 and content of NOₓ upstream of said first catalyst configuration 260. For this purpose a in the first control unit 200 stored catalyst model also may be used.

According to an embodiment said ammonia sensor 270 may be omitted and replaced by an ammonia model and/or NOₓ model in the control unit 200 which is arranged to calculate ammonia content and NOₓ content respectively in the passage 245 based on a number of parameters. Such a model may comprise at least one of the parameters dosed accumulated amount reducing agent, temperature of said exhaust gases and an exhaust gas mass flow from said engine 230.

Said first NOₓ sensor 240 and said second NOₓ sensor 270 may be used to provide information about prevailing content of NOₓ in the first passage 235 and the second passage 245 respectively. Hereby the first control unit 200 may be arranged to dose reducing agent in the first passage 235 in a suitable way on the basis of the information thereof.

According to an embodiment a temperature sensor 220 is arranged upstream of said first SCR catalyst configuration 260 at said first passage 235. Said temperature sensor 220 is arranged for communication with the first control unit 200 via a link L220. The temperature sensor 220 is arranged to continuously determining a prevailing temperature of the exhaust gases in the first passage 235. The temperature sensor 220 is arranged to continuously send signals comprising information about a prevailing temperature of the exhaust gases to the first control unit 200 via the link L220.

According to an embodiment the first control unit 200 is arranged to by means of a stored calculation model continuously determining a prevailing temperature of the exhaust gases in the first passage 235. This may be performed on the basis of information about into the engine 230 dosed amount of fuel and an exhaust gas mass flow from said engine 230.

The first control unit 200 is arranged to continuously determining a prevailing exhaust gas mass flow downstream of said motor 230. The first control unit 200 is arranged to continuously calculate a prevailing exhaust gas mass flow downstream of said engine 230. This may be performed on the basis of information about a prevailing air flow to an intake of said engine 230 and a fuel flow of said engine 230.

A mass flow sensor (not shown) may according to an embodiment be arranged upstream of said first SCR catalyst configuration 260 at said first passage 235. Said mass flow sensor is arranged for communication with the first control unit 200 via a suitable link (not shown). The mass flow sensor is arranged to continuously determining a prevailing mass flow of the exhaust gases in the first passage 235. The mass flow sensor is arranged to continuously send signals comprising information about a prevailing exhaust gas mass flow to the first control unit 200 via said link.

The first control unit 200 is arranged to continuously determine content ammonia downstream of a first SCR catalyst configuration 260; and
- continuously determining content of NOₓ in the exhaust gases downstream of a second, downstream of said first arranged SCR catalyst configuration 265;
- performing said purifying partly in a first state State 1 comprising evident overdosing of said reducing agent in first SCR catalyst configuration 260 and partly in a second state State 2 comprising evident underdosing of said reducing agent in said first SCR catalyst configuration 260; and
- shifting between said first state State 1 and said second state State 2 on the basis of the thus determined content ammonia and NOₓ in the exhaust gases.

The first control unit 200 is arranged to shift between further two states namely State 3 and/or State 4 according to an aspect of the invention.

The first control unit 200 is according to an embodiment arranged to by means of a stored model calculate a prevailing temperature of said SCR catalyst in said first SCR catalyst configuration 260 and in one embodiment of said SCR catalyst in said second SCR catalyst configuration 265. The first control unit 200 is according to an embodiment arranged to on the basis of information about exhaust gas mass flow and temperature of the exhaust gases in the first passage 235 calculate a prevailing temperature of the SCR catalyst in said first SCR catalyst configuration 260 respective, in one embodiment, the SCR catalyst in said second SCR catalyst configuration 265.

A temperature sensor (not shown) may according to an embodiment be arranged at said first SCR catalyst configuration 260. Said temperature sensor is arranged for communication with the first control unit 200 via a suitable link (not shown). The temperature flow sensor is arranged to continuously determining a prevailing temperature of the first SCR catalyst configuration 260. The temperature sensor is arranged to continuously send signals comprising information about a prevailing temperature of the first SCR catalyst configuration 260 to the first control unit 200 via said link.

According to an example there is provided an oxidation catalyst (not shown) arranged upstream of said first SCR catalyst configuration 260.

The first control unit 200 is arranged to:
- continuously determining an increase rate of the content of ammonium in said exhaust gases: and
- shifting from said first state to said second state when said increase rate of the content of ammonia exceeds a predetermined third threshold value downstream of said first SCR catalyst configuration.

The first control unit 200 is arranged to:
- continuously determining an increase rate of the content of ammonia in said exhaust gases: and
- shifting from said first state to said fourth state when said increase rate of the content of ammonia exceeds a predetermined fourth threshold value downstream of said first SCR catalyst configuration.

The first control unit 200 is arranged to:
- continuously determining an increase rate of the content of ammonia in said exhaust gases: and
- shifting from said second state to said fourth state when said increase rate of the content of ammonia exceeds a predetermined fourth threshold value downstream of said first SCR catalyst configuration.

The first control unit 200 is arranged to:
- continuously determining an increase rate of the content of ammonia in said exhaust gases: and
- shifting from said third state to said fourth state when said increase rate of the content of ammonia exceeds a predetermined fourth threshold value downstream of said first SCR catalyst configuration.

The first control unit 200 is arranged to:
- continuously determining an increase rate of the content of ammonia in said exhaust gases: and
- shifting from said third state to said second state when said increase rate of the content of ammonia exceeds a predetermined third threshold value downstream of said first SCR catalyst configuration.

The first control unit 200 is arranged to:
- continuously determining an increase rate of the content of NOₓ in said exhaust gases downstream of said second SCR catalyst configuration; and
- shifting from said second state to said first state when said increase rate of the content of NOₓ exceeds a predetermined threshold value.

The first control unit 200 is arranged to:
- continuously determining an increase rate of the of the content of NOₓ in said exhaust gases downstream of said second SCR catalyst configuration: and
- shifting from said third state to said first state when said increase rate of the content of NOₓ exceeds a predetermined threshold value.

The first control unit 200 is arranged to:
- continuously determining an increase rate of the of the content of NOₓ in said exhaust gases downstream of said second SCR catalyst configuration: and
- shifting from said fourth state to said first state when said increased rate of the content NOₓ exceeds a predetermined threshold value.

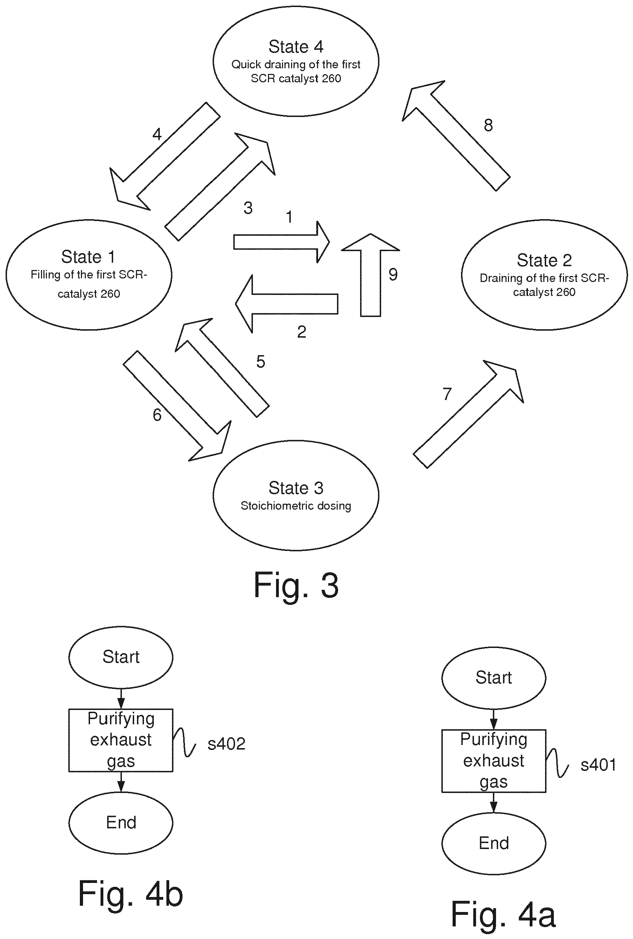

Figure 3 schematically illustrates a state diagram according to an aspect of the invention.

According to an aspect of the invention four different states regarding dosing of reducing agent by means of the dosing unit 250 are used.

A first state State1 comprises evident overdosing of a reducing agent by means of the dosing unit 250. Hereby there is dosed an amount reducing agent where a predetermined first value Stocih1 regarding a stoichiometric relationship relating to ammonia and NOₓ in the exhaust gases is achieved. Said predetermined first value Stoich1 may be 1.5. Said predetermined first value Stoich1 may be larger than 1.0. Said predetermined first value Stoich1 may be larger than 1.2. Said predetermined first value Stoich1 may be within a predetermined interval. Said predetermined value may be within an interval [1.5, 2.5]. Said predetermined first value Stoich1 may be within a predetermined interval. Said predetermined first value may be within an interval [1.1, 2.5]. The expression evident overdosing in this context means that an overdosing is established even if possible measure faults and/or systematic faults and/or uncertainties for determining the dosing is added, comprising at least one of the measurements from said first NOₓ sensor 240, a NOₓ flow from said engine 230, fault in reducing agent concentration, fault in dosing mass flow of the reducing agent from the dosing unit 250, or fault of eventual mass flow sensors. The purpose is thus to definitely achieve a storage of ammonia in the first SCR catalyst configuration 260, even at larger measurement faults and uncertainties.

A second state State2 comprises evident underdosing of a reducing agent by means of the dosing unit 250. Hereby there is dosed an amount reducing agent where a predetermined second value Stocih2 regarding a stoichiometric relationship relating to ammonia and NOₓ in the exhaust gases is achieved. Said predetermined second value Stoich2 may be 0.5. Said predetermined second value Stoich2 may be less than 1.0. Said predetermined second value Stoich2 may be less than 0.7. Said predetermined second value Stoich2 may be within a predetermined interval. Said predetermined second value may be within an interval [0.2, 0.8]. Said predetermined second value Stoich2 may be within a predetermined interval. Said predetermined second value may be within an interval [0.4, 0.9]. The expression evident underdosing in this context means that an underdosing is established even if possible measure faults and/or systematic faults and/or uncertainties for determining the dosing is added, comprising at least one of the measurements from said first NOₓ sensor 240, a NOₓ flow from said engine 230, fault in reducing agent concentration, fault in dosing mass flow of the reducing agent from the dosing unit 250, or fault of eventual mass flow sensors. The purpose is thus to definitely achieve a consumption of ammonia in the first SCR catalyst configuration 260 even at larger measurement faults and uncertainties.

A third state State3 comprises normal dosing of reducing agent by means of the dosing unit 250. Hereby there is dosed an amount reducing agent which is substantially equal a predetermined third value Stocih3 relating to a stoichiometric relationship relating to ammonia and NOₓ in the exhaust gases. Said predetermined third value Stoich3 may be 1.0. Said predetermined third value Stoich3 may be substantially equal 1.0. Said predetermined third value Stoich3 may be 0.95. Said predetermined third value Stoich3 may be 1.05. Said predetermined third value may be within a predetermined interval. Said predetermined third value may be within an interval [0.9, 1.1].

A fourth state State4 comprises lack of or very low dosing of reducing agent by means of the dosing unit 250. During said fourth state State4 there is performed said purifying in a way that dosing of reducing agent corresponds to an extreme underdosing. Hereby there is dosed an amount reducing agent which is substantially equal a predetermined fourth value Stocih4 concerning a stoichiometric relationship relating to ammonia and NOₓ in the exhaust gases. Said predetermined fourth value Stoich4 may be 0.0. Said predetermined fourth value Stoich4 may be substantially equal zero (0). Said predetermined fourth value Stoich4 may be 0.05. Said predetermined fourth value Stoich4 may be 0.1. Said predetermined fourth value may be within a predetermined interval. Said predetermined fourth value may be within an interval [0.0, 0.1]. Said predetermined fourth value may be within an interval [0.0, 0.4].

Shifting between the different states may be performed by means of the first control unit 200. Shifting between two different states is according to the invention performed on the basis on predetermined criteria which are exemplified in greater detail below.

With reference to Figure 3 there is illustrated a number of arrows 1-9 representing different state shifts. It should be noted that three shifts namely from State4 to State 3, State4 to State2 and State2 to State 3 are not illustrated. Said shifts may be performed according to an aspect of the invention but are in practice not desired and have not been depicted herein.

### Shift 1, between State1 and State2

Shifting from said first state State1 to said second state State2 may be performed when a determined content of ammonia at a position downstream of said first SCR catalyst configuration 260 and upstream of said second SCR catalyst configuration 265 exceeds a first threshold value. Said first threshold value may be a predetermined threshold value. Said first threshold value may be for example 10 ppm.

### Shift 2, between State2 and State1

Shifting from said second state State2 to said first state State1 may be performed when a determined content of NOₓ in the exhaust gases downstream of said second SCR catalyst configuration exceeds a predetermined value. Said predetermined value may be a predetermined threshold value. Said predetermined value may be for example 10 ppm.

### Shift 3, between State1 and State4

Shifting from said first state State1 to said fourth state State4 may be performed when the content of ammonia in the exhaust gases downstream of said first SCR catalyst configuration exceeds a second threshold value. Said second threshold value may considerably exceed said first threshold value. Said second threshold value may be a predetermined threshold value. Said second threshold value may be for example 100 ppm.

### Shift 4, between State4 and State1

Shifting from said fourth state State4 to said first state State1 may be performed when a predetermined content of NOₓ in the exhaust gases downstream of said second SCR catalyst configuration exceeds a predetermined value. Said predetermined value may be a predetermined threshold value. Said predetermined value may be for example 10 ppm.

### Shift, 5 between State3 and State1

Shifting from said third state State3 to said first state State1 may be performed when the content of NOₓ in the exhaust gases exceeds a predetermined value. Said predetermined value may be a predetermined threshold value. Said predetermined value may be for example 10 ppm.

### Shift 6, between State1 and State3

Shifting from said first state State1 to said third state State3 may be performed when the content of ammonia downstream of said first SCR catalyst configuration is below a threshold value. Said first threshold value may be a predetermined threshold value. Said first threshold value may be for example 10 ppm.

Shifting from said first state State1 to said third state State3 may be performed when the content of NOₓ downstream of said second SCR catalyst configuration is lower than a predetermined value. Said predetermined value may be a predetermined threshold value. Said predetermined value may be for example 10 ppm.

Shifting from said first state State1 to said third state State3 should eventually be performed when a certain degree of coverage of ammonia (storage of ammonia) has been achieved at said first SCR catalyst configuration. Degree of coverage of ammonia of an SCR catalyst configuration depends on a temperature of said SCR catalyst configuration. A function between a degree of coverage of ammonia and SCR catalyst configuration may be stored in the first control unit 200.

The demand on accuracy concerning degree of coverage of ammonia in the first SCR catalyst configuration 260 may be set low and may for a certain SCR catalyst temperature for example be formulated as follows: > 50% degree of coverage of ammonia contributes to make it possible to shift from State1 to State 3. The degree of coverage may be calculated by means of a NH₃ storage model, which may comprise a line which depicts NH₃ storage capacity as function of SCR catalyst temperature. An SCR catalyst has in general decreasing NH₃ storing capacity with increasing temperature and vice versa. The SCR system may comprise means for determining NH₃ storage capacity of the first SCR catalyst configuration 260. Said NH₃ storage capacity may in one embodiment be determined by means of one or more temperature sensors which in suitable positions are measuring the temperature in the SCR system and convey measurements to the first control unit 200 which thereafter by means of the NH₃ storage model may calculate NH₃ storage capacity. The degree of coverage of NH₃ may be calculated by subtracting the mass of transformed NH₃ from the mass of dosed NH₃ and thereafter perform accumulative calculation. By dividing by a catalyst volume the calculation will be performed independently of catalyst volume and may thus be used for different catalysts of various sizes of the same kind. Said temperature dependence which is making it possible to shift to State3 will depend on different vehicle operating conditions.

### Shift 7, between State3 and State2

Shifting from said third state State3 to said second state State2 may be performed when the content of ammonia in the exhaust gases downstream of said first SCR catalyst configuration exceeds a first threshold value. Said first threshold value may be a predetermined threshold value. Said first threshold value may be for example 10 ppm.

### Shift 8, between State2 and State4

Shifting from said second state State2 to said fourth state State4 may be performed when the content of ammonia in the exhaust gases downstream of said first SCR catalyst configuration exceeds a second threshold value. Said second threshold value may considerably exceed said first threshold value. Said second threshold value may be a predetermined threshold value. Said second threshold value may be for example 100 ppm.

### Shift 9, between State3 and State4

Shifting from said third state State3 to said fourth state State4 may be performed when the content of ammonia in the exhaust gases downstream of said first SCR catalyst configuration exceeds a second threshold value. Said second threshold value may considerably exceed said first threshold value. Said second threshold value may be a predetermined threshold value. Said second threshold value may be for example 100 ppm.

By where applicable using the third state State3, too fast shifts between the first State1 and the second state State2 may be avoided. By introducing a so called stoichiometric dosing (state State3) a time period between state shifts may be prolonged which is advantageous by several reasons. Hereby even a conversion rate of the SCR system may be increased considerably. Despite the dosing hereby is controlled towards a stoichiometric relationship substantially equal 1 various deviations may be dealt with in an advantageous way.

What happens is that the first SCR catalyst configuration 260 slowly is filled or drained until a trigger level for NH₃- or NOₓ sensor is achieved and the system is shifting as usual to the first state State1 or the second state State2 directly so as to return to the correct degree of coverage of NH₃ in the first SCR catalyst configuration 260. The third state State3 may thus be used to prolong the time between two state shifts regarding the first state State1 and the second state State2.

The fourth state State4 is advantageous to be able to dose stoichiometric essentially equal 0 when a temperature transient of the SCR system results in that NH₃ is getting loose from the first SCR catalyst configuration 260 in large amounts. By shutting off the dosing NOₓ is allowed to consume NH₃ from the first SCR catalyst configuration 260 starting at a front of the catalyst. At the same time NH₃ slips out from an outlet of the first SCR catalyst configuration 260 and is buffered in the second SCR catalyst configuration 265. By allowing shut down dosing during this period a volume of the second catalyst configuration may thus be reduced compared to if only the second state State2 has been provided.

Below is a schematic description of the system during operation:
1) First evident over stoichiometric dosing is performed (State1) until the NOₓ conversion reaches 100% and stays there for a while, but before NH₃ slip arises from the first SCR catalyst configuration 260 step 2 is performed).
2) Dosing of reducing agent is lowered to a stoichiometric relationship substantially equal 1.0 (State3). This is performed to prolong the time to the shift State1 and State2 because conversion rate is lost during the shift.
3) Depending upon if the SCR catalyst in the first catalyst configuration 260 has been emptied or filled up (either there is provided a NOₓ signal after the second SCR catalyst configuration 265 or a slip signal is generated after the first SCR catalyst configuration 260) shifting the state to state State1 or state State 2 is performed. Hereby it is assumed that the system is filled why shifting is performed to the second state State2.
4) Hereby the second state State2 is activated and the system is emptied until the NOₓ sensor 280 passes its triggering level which again triggers shifting to the first state State1 and step 1 is performed again.
5) Whenever an acceleration of the vehicle may happen, which may lead to an evident temperature increase of the exhaust gases from the engine 230. Hereby large quantities NH₃ will get loose out of the first SCR catalyst configuration 260 and an evident slip increase downstream of the first SCR catalyst configuration 260 will happen. Hereby there is provided a high NH₃ trigger level which triggers shifting to the fourth state State4 which may comprise that the dosing may be totally shut off.

Figure 4a schematically illustrates a flow chart pertaining to a method for, by means of a reducing agent, purifying exhaust gas in an exhaust gas flow from an engine in an SCR system comprising two SCR catalyst configurations arranged in series in said exhaust gas flow according to an embodiment of the invention. The method comprises a first method step s401. The step s401 comprises the steps of:
- continuously determining a content of ammonia in said exhaust gas downstream of said first SCR catalyst configuration,
- continuously determining a content of NOₓ in said exhaust gas downstream of a second SCR catalyst configuration, which is arranged downstream of said first SCR catalyst configuration;
- performing said purifying partly in a first state comprising evident overdosing of said reducing agent in said first SCR catalyst configuration and partly in a second state comprising evident underdosing of said reducing agent in said first SCR catalyst configuration, and
- shifting between said first state and said second state on the basis of said determined content of ammonia and said content of NOₓ in said exhaust gas. After the step s401 the method ends.

Figure 4b schematically illustrates a flow chart pertaining to a method for, by means of a reducing agent, purifying exhaust gas in an exhaust gas flow from an engine 230 in an SCR system comprising two SCR catalyst configurations, comprising a first SCR catalyst configuration 260 and a second SCR catalyst configuration 265 arranged in series in said exhaust gas flow, wherein said second SCR catalyst configuration 265 is arranged downstream of said first catalyst configuration 260. The method comprises a first method step s401. The method step comprises the steps of:
- continuously determining a content of ammonia in said exhaust gas at a position downstream of said first SCR catalyst configuration 260 and upstream of said second catalyst configuration 265, and
- continuously determining a content of NOₓ in said exhaust gas downstream of said second SCR catalyst configuration 265;
- performing said purifying partly in a first state State 1 comprising evident overdosing of said reducing agent in said first SCR catalyst configuration 260 and partly in a second state State 2 comprising evident underdosing of said reducing agent in said first SCR catalyst configuration 260, wherein the expressions overdosing and underdosing relate to a dosed amount reducing agent leading to a stoichiometric relationship between ammonia and NOₓ in said exhaust gas which is larger than 1 and lesser than 1, respectively; and
- shifting between said first state State 1 and said second state State 2, wherein a shift from first said state State 1 to said second state State 2 is performed on the basis of said determined content of ammonia and wherein a shift from said second state State 2 to said first state State 1 is performed on the basis of said content of NOₓ in said exhaust gas. After the step s402 the method ends.

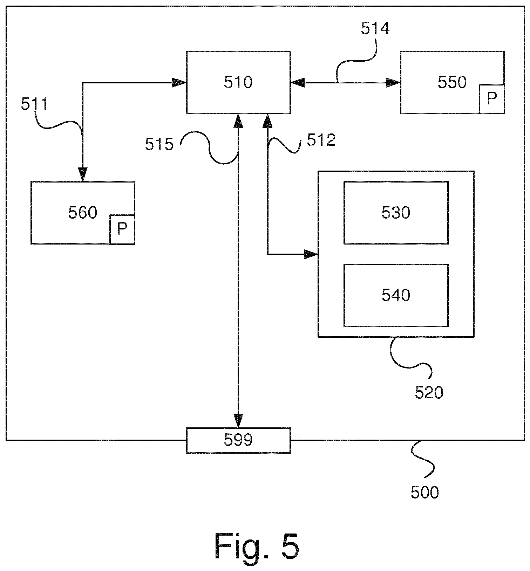

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer programme P which comprises routines for continuously determining a content of ammonia in said exhaust gas downstream of a first SCR catalyst configuration;
- continuously determining a content of NOₓ in said exhaust gas downstream of a second SCR catalyst configuration, which is arranged downstream of said first SCR catalyst configuration;
- performing said purifying partly in a first state comprising evident overdosing of said reducing agent in said first SCR catalyst configuration and partly in a second state comprising evident underdosing of said reducing agent in said first SCR catalyst configuration; and
- shifting between said first state and said second state on the basis of said determined content of ammonia and said content of NOₓ in said exhaust gas.

The computer programme P comprises routines for performing said purifying in a third state, wherein the dosing of said reducing agent in said first SCR catalyst configuration is between said overdosing and said underdosing.

The computer programme P comprises routines for performing said purifying in a fourth state, wherein said dosing of said reducing agent in said first SCR catalyst configuration 260 corresponds to an extreme underdosing.

The computer programme P comprises routines for shifting from said first state to said second state when said determined content of ammonia downstream of said first SCR catalyst configuration exceeds a first threshold value.

The computer programme P comprises routines for shifting from said second state to said first state when said determined content of NOₓ in said exhaust gas downstream of said second SCR catalyst configuration exceeds a predetermined value.

The computer programme P comprises routines for shifting from said second state to said fourth state when said determined content of ammonia in said exhaust gas downstream of said first SCR catalyst configuration exceeds a second threshold value, essentially exceeding said first threshold value.

The computer programme P comprises routines for shifting from said first state to said fourth state when said determined content of ammonia in said exhaust gas downstream of said first SCR catalyst configuration exceeds a second threshold value, essentially exceeding said first threshold value.

The computer programme P comprises routines for shifting from said fourth state State4 to said first state State1 when said determined content of NOₓ in said exhaust gas downstream of said second SCR catalyst configuration exceeds a predetermined value.

The computer programme P comprises routines for shifting from said third state to said second state when said determined content of ammonia in said exhaust gas downstream of said first SCR catalyst configuration exceeds said first threshold value.

The computer programme P comprises routines for shifting from said third state to said first state when said determined content of NOₓ in said exhaust gas exceeds said predetermined value.

The computer programme P comprises routines for shifting from said first state to said third state when said determined content of ammonia downstream of said first SCR catalyst configuration is a below said first threshold value and said determined content of NOₓ downstream of said second SCR catalyst configuration is lower than said predetermined value and a certain degree of coverage of ammonia has been achieved for said first SCR catalyst configuration.

The computer programme P comprises routines for:
- performing said purification in a fourth state, wherein the dosing of said reducing agent in said first SCR catalyst configuration corresponds to an extreme underdosing corresponding to a stoichiometric relationship between ammonia and NOx in said exhaust gas being essentially equal to 0.

The computer programme P comprises routines for:
- continuously determining an increase rate of said content of ammonia in said exhaust gas; and
- shifting from said first state to said second state when said increase rate of said content of ammonia exceeds a predetermined third threshold value downstream of said first SCR catalyst configuration.

The computer programme P comprises routines for:
- continuously determining an increase rate of said content of ammonia in said exhaust gas; and
- shifting from said first state to said fourth state when said increase rate of said content of ammonia exceeds a predetermined fourth threshold value downstream of said first SCR catalyst configuration.

The computer programme P comprises routines for:
- continuously determining an increase rate of said content of ammonia in said exhaust gas; and
- shifting from said second state to said fourth state when said increase rate of said content of ammonia exceeds a predetermined fourth threshold value downstream of said first SCR catalyst configuration.

The computer programme P comprises routines for:
- continuously determining an increase rate of said content of ammonia in said exhaust gas; and
- shifting from said third state to said fourth state when said increase rate of said content of ammonia exceeds a predetermined fourth threshold value downstream of said first SCR catalyst configuration.

The computer programme P comprises routines for:
- continuously determining an increase rate of said content of ammonia in said exhaust gas; and
- shifting from said third state to said second state when said increase rate of said content of ammonia exceeds a predetermined third threshold value downstream of said first SCR catalyst configuration.

The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links L210, L230, L240, L250, L270, L280 and L292 connected to it (see Figure 2a and 2b).

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for, by means of a reducing agent, purifying exhaust gas in an exhaust gas flow from an engine (230) in an SCR system comprising two SCR catalyst configurations (260, 265), comprising a first SCR catalyst configuration (260) and a second SCR catalyst configuration (265) arranged in series in said exhaust gas flow, wherein said second SCR catalyst configuration (265) is arranged downstream of said first catalyst configuration (260), comprising the steps of:
- continuously determining a content of ammonia in said exhaust gas at a position downstream of said first SCR catalyst configuration (260) and upstream of said second catalyst configuration (265), and
- continuously determining a content of NOₓ in said exhaust gas downstream of said second SCR catalyst configuration (265),
**characterized in that** it further comprises the steps of:
- performing said purifying partly in a first state (State 1) comprising evident overdosing of said reducing agent in said first SCR catalyst configuration (260) and partly in a second state (State 2) comprising evident underdosing of said reducing agent in said first SCR catalyst configuration (260), wherein the expressions overdosing and underdosing relate to a dosed amount reducing agent leading to a stoichiometric relationship between ammonia and NOₓ in said exhaust gas which is larger than 1 and lesser than 1, respectively; and
- shifting between said first state (State 1) and said second state (State 2), wherein a shift from first said state (State 1) to said second state (State 2) is performed on the basis of said determined content of ammonia and wherein a shift from said second state (State 2) to said first state (State 1) is performed on the basis of said content of NOₓ in said exhaust gas.

2. A method according to claim 1, further comprising the step of:
- performing said purifying in a third state (State 3), wherein the dosing of said reducing agent in said first SCR catalyst configuration (260) is between said overdosing and said underdosing.

3. A method according to claim 1 or 2, further comprising the step of:
- performing said purifying in a fourth state (State 4), wherein said dosing of said reducing agent in said first SCR catalyst configuration (260) corresponds to an extreme underdosing, wherein extreme underdosing corresponds to an stoichiometric relationship between ammonia and NOₓ in said exhaust gas which is substantially equal to 0.

4. A method according to any one of the foregoing claims, further comprising the step of:
- shifting from said first state (State 1) to said second state (State 2) when said determined content of ammonia in said exhaust gas downstream of said first SCR catalyst configuration (260) exceeds a first threshold value.

5. A method according to any one of the foregoing claims, further comprising the step of:
- shifting from said second state (State 2) to said first state (State 1) when said determined content of NOₓ in said exhaust gas downstream of said second SCR catalyst configuration (265) exceeds a predetermined value.

6. A method according to any one of the foregoing claims, comprising the step of:
- shifting from said second state (State 2) to said fourth state (State 4) when said determined content of ammonia in said exhaust gas downstream of said first SCR catalyst configuration (260) exceeds a second threshold value.

7. A method according to any one of the foregoing claims, comprising the step of:
- shifting from said first state (State 1) to said fourth state (State 4) when said determined content of ammonia in said exhaust gas downstream of said first SCR catalyst configuration (260) exceeds a second threshold value.

8. A method according to any one of the foregoing claims, comprising the step of:
- shifting from said fourth state (State 4) to said first state (State 1) when said determined content of NOₓ in said exhaust gas downstream of said second SCR catalyst configuration (265) exceeds a predetermined value.

9. A method according to any one of the foregoing claims, comprising the step of:
- shifting from said third state (State 3) to said second state (State 2) when said determined content of ammonia in said exhaust gas downstream of said first SCR catalyst configuration (260) exceeds a first threshold value.

10. A method according to any one of the foregoing claims, comprising the step of:
- shifting from said third state (State 3) to said first state (State 1) when said determined content of NOₓ in said exhaust gas downstream of said second SCR catalyst configuration (265) exceeds a predetermined value.

11. A method according to any one of the foregoing claims, comprising the step of:
- shifting from said first state (State 1) to said third state (State 3) when said determined content of ammonia downstream of said first SCR catalyst configuration (260) is a below a first threshold value and said determined content of NOₓ downstream of said second SCR catalyst configuration (265) is lower than a predetermined value and a certain degree of coverage of ammonia has been achieved for said first SCR catalyst configuration.

12. An SCR system for, by means of a reducing agent, purifying exhaust gas in an exhaust gas flow from an engine (230) in an SCR system comprising two SCR catalyst configurations (260, 265), comprising a first SCR catalyst configuration (260) and a second SCR catalyst configuration (265) arranged in series in said exhaust gas flow, wherein said second SCR catalyst configuration (265) is arranged downstream of said first catalyst configuration (260), comprising:
- means (270) for continuously determining a content of ammonia in said exhaust gas at a position downstream of said first SCR catalyst configuration (260) and upstream of said second catalyst configuration (265), and
- means (280) for continuously determining a content of NOₓ in said exhaust gas downstream of said second SCR catalyst configuration (265),
**characterized by:**
- means (200; 210; 500) for performing said purifying partly in a first state (State 1) comprising evident overdosing of said reducing agent in said first SCR catalyst configuration (260) and partly in a second state (State 2) comprising evident underdosing of said reducing agent in said first SCR catalyst configuration (260), wherein the expressions overdosing and underdosing relate to a dosed amount reducing agent leading to a stoichiometric relationship between ammonia and NOₓ in said exhaust gas which is larger than 1 and lesser than 1, respectively; and
- means (200; 210; 500) for shifting between said first state (State 1) and said second state (State 2), wherein a shift from first said state (State 1) to said second state (State 2) is performed on the basis of said determined content of ammonia and wherein a shift from said second state (State 2) to said first state (State 1) is performed on the basis of said content of NOₓ in said exhaust gas.

13. An SCR system according to claim 12, further comprising:
- means (200; 210; 500) for performing said purifying in a third state (State 3), wherein the dosing of said reducing agent in said first SCR catalyst configuration (260) is between said overdosing and said underdosing.

14. An SCR system according to claim 12 or 13, further comprising:
- means (200; 210; 500) for performing said purifying in a fourth state (State 4), wherein said dosing of said reducing agent in said first SCR catalyst configuration (260) corresponds to an extreme underdosing, wherein extreme underdosing corresponds to an stoichiometric relationship between ammonia and NOₓ in said exhaust gas which is substantially equal to 0.

15. An SCR system according to any one of the claims 12-14, further comprising:
- means (200; 210; 500) for shifting from said first state (State 1) to said second state (State 2) when said determined content of ammonia in said exhaust gas downstream of said first SCR catalyst configuration (260) exceeds a first threshold value.

16. An SCR system according to any one of the claims 12-15, further comprising:
- means (200; 210; 500) for shifting from said second state (State 2) to said first state (State 1) when said determined content of NOₓ in said exhaust gas downstream of said second SCR catalyst configuration (265) exceeds a predetermined value.

17. An SCR system according to any of the claims 12-16, further comprising:
- means (200; 210; 500) for shifting from said second state (State 2) to said fourth state (State 4) when said determined content of ammonia in said exhaust gas downstream of said first SCR catalyst configuration (260) exceeds a second threshold value.

18. An SCR system according to any of the claims 12-17, further comprising:
- means for shifting from said first state (State 1) to said fourth state (State 4) when said determined content of ammonia in said exhaust gas downstream of said first SCR catalyst configuration (260) exceeds a second threshold value.

19. An SCR system according to any of the claims 12-18, further comprising:
- means (200; 210; 500) for shifting from said third state (State 3) to said second state (State 2) when said determined content of ammonia in said exhaust gas downstream of said first SCR catalyst configuration (260) exceeds a first threshold value.

20. An SCR system according to any of the claims 12-19, further comprising:
- means (200; 210; 500) for shifting from said third state (State 3) to said first state (State 1) when said determined content of NOₓ in said exhaust gas downstream of said second SCR catalyst configuration (265) exceeds a predetermined value.

21. An SCR system according to any of the claims 12-20, further comprising:
- means (200; 210; 500) for determining a degree of coverage of ammonia of said first SCR catalyst configuration (260); and
- means (200; 210; 500) for shifting from said first state (State 1) to said third state (State 3) when said determined content of ammonia downstream of said first SCR catalyst configuration (260) is a below a first threshold value and said determined content of NOₓ downstream of said second SCR catalyst configuration (265) is lower than a predetermined value and a certain degree of coverage of ammonia has been achieved for said first SCR catalyst configuration (260).

22. An SCR system according to any of the claims 12-21, wherein said first SCR catalyst configuration (260) comprises an SCR catalyst device and a filter coated with an SCR coating.

23. An SCR system according to any of the claims 12-22, wherein said second SCR catalyst configuration (265) comprises an SCR catalyst device and an ammonia slip catalyst.

24. An SCR system according to any of the claims 12-23, wherein at least one of said first SCR catalyst configuration (260) and said second SCR catalyst configuration (265) comprises a vanadium substrate.

25. A motor vehicle (100; 110) comprising an SCR system according to any one of claims 12-24.

26. A motor vehicle (100; 110) according to claim 25, which vehicle is any from among a truck, bus or passenger car.

27. A computer program (P) for controlling a, by means of a reducing agent, purifying process of exhaust gas in an exhaust gas flow from an engine (230) in an SCR system comprising two SCR catalyst configurations (260, 265) arranged in series in said exhaust gas flow, wherein said computer program (P) comprises program code for causing an electronic control unit (200; 500) or another computer (210; 500) connected to the electronic control unit (200; 500) to perform the steps according to any of the claims 1-11.

28. A computer program product containing a program code stored on a computer-readable medium for performing method steps according to any of claims 1-11, when said computer program is run on an electronic control unit (200; 500) or another computer (210; 500) connected to the electronic control unit (200; 500).

## Patentansprüche

1. Verfahren zur Reinigung des Abgases in einem Abgasstrom aus einem Verbrennungsmotor (230) mittels eines Reduktionsmittels in einem SCR-System, das zwei SCR-Katalysatorkonfigurationen (260, 265) mit einer ersten SCR-Katalysatorkonfiguration (260) und einer zweiten SCR-Katalysatorkonfiguration (265) aufweist, die im Abgasstrom in Reihe angeordnet sind, wobei die zweite SCR-Katalysatorkonfiguration (265) stromabwärts der ersten SCR-Katalysatorkonfiguration (260) angeordnet ist, das die Schritte aufweist:
- kontinuierliches Bestimmen des Ammoniakgehalts im Abgas an einer Position stromabwärts der ersten SCR-Katalysatorkonfiguration (260) und stromaufwärts der zweiten SCR-Katalysatorkonfiguration (265), und
- kontinuierliches Bestimmen des NOₓ-Anteils im Abgas stromabwärts der zweiten SCR-Katalysatorkonfiguration (265),
**dadurch gekennzeichnet, dass** es ferner die Schritte aufweist:
- Ausführen der Reinigung zum Teil in einem ersten Zustand (Zustand 1), der eine deutliche Überdosierung des Reduktionsmittels in der ersten SCR-Katalysatorkonfiguration (260) aufweist, und zum Teil in einem zweiten Zustand (Zustand 2), der eine deutliche Unterdosierung des Reduktionsmittels in der ersten SCR-Katalysatorkonfiguration (260) aufweist, wobei sich die Begriffe Überdosierung und Unterdosierung auf eine Dosiermenge des Reduktionsmittels beziehen, die zu einer stöchiometrischen Beziehung zwischen Ammoniak und NOₓ im Abgas führt, die größer bzw. kleiner als 1 ist; und
- Wechseln zwischen dem ersten Zustand (Zustand 1) und dem zweiten Zustand (Zustand 2), wobei ein Wechsel vom ersten Zustand (Zustand 1) in den zweiten Zustand (Zustand 2) auf Basis des bestimmten Ammoniakgehalts erfolgt, und wobei ein Wechsel aus dem zweiten Zustand (Zustand 2) in den ersten Zustand (Zustand 1) auf Basis des NOₓ-Anteils im Abgas erfolgt.

2. Verfahren nach Anspruch 1, das ferner den Schritt aufweist:
- Ausführen der Reinigung in einem dritten Zustand (Zustand 3), wobei die Dosierung des Reduktionsmittels in der ersten SCR-Katalysatorkonfiguration (260) zwischen der Überdosierung und der Unterdosierung liegt.

3. Verfahren nach Anspruch 1 oder 2, das ferner den Schritt aufweist:
- Ausführen der Reinigung in einem vierten Zustand (Zustand 4), wobei die Dosierung des Reduktionsmittels in der ersten SCR-Katalysatorkonfiguration (260) einer extremen Unterdosierung entspricht, wobei eine extreme Unterdosierung einer stöchiometrischen Beziehung zwischen Ammoniak und NOₓ im Abgas entspricht, die im Wesentlichen gleich 0 ist.

4. Verfahren nach einem der vorigen Ansprüche, das ferner den Schritt aufweist:
- Wechseln vom ersten Zustand (Zustand 1) in den zweiten Zustand (Zustand 2), wenn der bestimmte Ammoniakgehalt im Abgas stromabwärts der ersten SCR-Katalysatorkonfiguration (260) einen ersten Schwellenwert überschreitet.

5. Verfahren nach einem der vorigen Ansprüche, das ferner den Schritt aufweist:
- Wechseln vom zweiten Zustand (Zustand 2) in den ersten Zustand (Zustand 1), wenn der bestimmte NOx-Anteil im Abgas stromabwärts der zweiten SCR-Katalysatorkonfiguration (265) einen vorgegebenen Wert überschreitet.

6. Verfahren nach einem der vorigen Ansprüche, das den Schritt aufweist:
- Wechseln vom zweiten Zustand (Zustand 2) in den vierten Zustand (Zustand 4), wenn der bestimmte Ammoniakgehalt im Abgas stromabwärts der ersten SCR-Katalysatorkonfiguration (260) einen zweiten Schwellenwert überschreitet.

7. Verfahren nach einem der vorigen Ansprüche, das den Schritt aufweist:
- Wechseln vom ersten Zustand (Zustand 1) in den vierten Zustand (Zustand 4), wenn der bestimmte Ammoniakgehalt im Abgas stromabwärts der ersten SCR-Katalysatorkonfiguration (260) einen zweiten Schwellenwert überschreitet.

8. Verfahren nach einem der vorigen Ansprüche, das den Schritt aufweist:
- Wechseln vom vierten Zustand (Zustand 4) in den ersten Zustand (Zustand 1), wenn der bestimmte NOx-Anteil im Abgas stromabwärts der zweiten SCR-Katalysatorkonfiguration (265) einen vorgegebenen Wert überschreitet.

9. Verfahren nach einem der vorigen Ansprüche, das den Schritt aufweist:
- Wechseln vom dritten Zustand (Zustand 3) in den zweiten Zustand (Zustand 2), wenn der bestimmte Ammoniakgehalt im Abgas stromabwärts der ersten SCR-Katalysatorkonfiguration (260) einen ersten Schwellenwert überschreitet.

10. Verfahren nach einem der vorigen Ansprüche, das den Schritt aufweist:
- Wechseln vom dritten Zustand (Zustand 3) in den ersten Zustand (Zustand 1), wenn der bestimmte NOx-Anteil im Abgas stromabwärts der zweiten SCR-Katalysatorkonfiguration (265) einen vorgegebenen Wert überschreitet.

11. Verfahren nach einem der vorigen Ansprüche, das den Schritt aufweist:
- Wechseln vom ersten Zustand (Zustand 1) in den dritten Zustand (Zustand 3), wenn der bestimmte Ammoniakgehalt stromabwärts der ersten SCR-Katalysatorkonfiguration (260) einen ersten Schwellenwert unterschreitet, und der bestimmte NOx-Anteil stromabwärts der zweiten SCR-Katalysatorkonfiguration (265) niedriger ist als ein vorgegebener Wert und ein bestimmter Ammoniak-Bedeckungsgrad für die erste SCR-Katalysatorkonfiguration erreicht worden ist.

12. SCR-System zur Reinigung des Abgases in einem Abgasstrom aus einem Verbrennungsmotor (230) mittels eines Reduktionsmittels in einem SCR-System, das zwei SCR-Katalysatorkonfigurationen (260, 265) mit einer ersten SCR-Katalysatorkonfiguration (260) und einer zweiten SCR-Katalysatorkonfiguration (265) aufweist, die im Abgasstrom in Reihe angeordnet sind, wobei die zweite SCR-Katalysatorkonfiguration (265) stromabwärts der ersten SCR-Katalysatorkonfiguration (260) angeordnet ist, mit:
- einem Mittel (270) zum kontinuierlichen Bestimmen des Ammoniakgehalts im Abgas an einer Position stromabwärts der ersten SCR-Katalysatorkonfiguration (260) und stromaufwärts der zweiten SCR-Katalysatorkonfiguration (265), und
- einem Mittel (280) zum kontinuierlichen Bestimmen des NOₓ-Anteils im Abgas stromabwärts der zweiten SCR-Katalysatorkonfiguration (265),
**gekennzeichnet durch**:
- ein Mittel (200; 210; 500) zum Ausführen der Reinigung zum Teil in einem ersten Zustand (Zustand 1), der eine deutliche Überdosierung des Reduktionsmittels in der ersten SCR-Katalysatorkonfiguration (260) aufweist, und zum Teil in einem zweiten Zustand (Zustand 2), der eine deutliche Unterdosierung des Reduktionsmittels in der ersten SCR-Katalysatorkonfiguration (260) aufweist, wobei sich die Begriffe Überdosierung und Unterdosierung auf eine Dosiermenge des Reduktionsmittels beziehen, die zu einer stöchiometrischen Beziehung zwischen Ammoniak und NOₓ im Abgas führt, die größer bzw. kleiner als 1 ist; und
- ein Mittel (200; 210; 500) zum Wechseln zwischen dem ersten Zustand (Zustand 1) und dem zweiten Zustand (Zustand 2), wobei ein Wechsel vom ersten Zustand (Zustand 1) in den zweiten Zustand (Zustand 2) auf Basis des bestimmten Ammoniakgehalts erfolgt, und wobei ein Wechsel aus dem zweiten Zustand (Zustand 2) in den ersten Zustand (Zustand 1) auf Basis des NOₓ-Anteils im Abgas erfolgt.

13. SCR-System nach Anspruch 12, ferner aufweisend:
- ein Mittel (200; 210; 500) zum Ausführen der Reinigung in einem dritten Zustand (Zustand 3), wobei die Dosierung des Reduktionsmittels in der ersten SCR-Katalysatorkonfiguration (260) zwischen der Überdosierung und der Unterdosierung liegt.

14. SCR-System nach Anspruch 12 oder 13, ferner aufweisend:
- ein Mittel (200; 210; 500) zum Ausführen der Reinigung in einem vierten Zustand (Zustand 4), wobei die Dosierung des Reduktionsmittels in der ersten SCR-Katalysatorkonfiguration (260) einer extremen Unterdosierung entspricht, wobei eine extreme Unterdosierung einer stöchiometrischen Beziehung zwischen Ammoniak und NOₓ im Abgas entspricht, die im Wesentlichen gleich 0 ist.

15. SCR-System nach einem der Ansprüche 12 bis 14, ferner aufweisend:
- ein Mittel (200; 210; 500) zum Wechseln vom ersten Zustand (Zustand 1) in den zweiten Zustand (Zustand 2), wenn der bestimmte Ammoniakgehalt im Abgas stromabwärts der ersten SCR-Katalysatorkonfiguration (260) einen ersten Schwellenwert überschreitet.

16. SCR-System nach einem der Ansprüche 12 bis 15, ferner aufweisend:
- ein Mittel (200; 210; 500) zum Wechseln vom zweiten Zustand (Zustand 2) in den ersten Zustand (Zustand 1), wenn der bestimmte NOx-Anteil im Abgas stromabwärts der zweiten SCR-Katalysatorkonfiguration (265) einen vorgegebenen Wert überschreitet.

17. SCR-System nach einem der Ansprüche 12 bis 16, ferner aufweisend:
- ein Mittel (200; 210; 500) zum Wechseln vom zweiten Zustand (Zustand 2) in den vierten Zustand (Zustand 4), wenn der bestimmte Ammoniakgehalt im Abgas stromabwärts der ersten SCR-Katalysatorkonfiguration (260) einen zweiten Schwellenwert überschreitet.

18. SCR-System nach einem der Ansprüche 12 bis 17, ferner aufweisend:
- ein Mittel (200; 210; 500) zum Wechseln vom ersten Zustand (Zustand 1) in den vierten Zustand (Zustand 4), wenn der bestimmte Ammoniakgehalt im Abgas stromabwärts der ersten SCR-Katalysatorkonfiguration (260) einen zweiten Schwellenwert überschreitet.

19. SCR-System nach einem der Ansprüche 12 bis 18, ferner aufweisend:
- ein Mittel (200; 210; 500) zum Wechseln vom dritten Zustand (Zustand 3) in den zweiten Zustand (Zustand 2), wenn der bestimmte Ammoniakgehalt im Abgas stromabwärts der ersten SCR-Katalysatorkonfiguration (260) einen ersten Schwellenwert überschreitet.

20. SCR-System nach einem der Ansprüche 12 bis 19, ferner aufweisend:
- ein Mittel (200; 210; 500) zum Wechseln vom dritten Zustand (Zustand 3) in den ersten Zustand (Zustand 1), wenn der bestimmte NOx-Anteil im Abgas stromabwärts der zweiten SCR-Katalysatorkonfiguration (265) einen vorgegebenen Wert überschreitet.

21. SCR-System nach einem der Ansprüche 12 bis 20, ferner aufweisend:
- ein Mittel (200; 210; 500) zum Bestimmen des Ammoniak-Bedeckungsgrades der ersten SCR-Katalysatorkonfiguration (260); und
- ein Mittel (200; 210; 500) zum Wechseln vom ersten Zustand (Zustand 1) in den dritten Zustand (Zustand 3), wenn der bestimmte Ammoniakgehalt stromabwärts der ersten SCR-Katalysatorkonfiguration (260) einen ersten Schwellenwert unterschreitet, und der bestimmte NOx-Anteil stromabwärts der zweiten SCR-Katalysatorkonfiguration (265) niedriger ist als ein vorgegebener Wert und ein bestimmter Ammoniak-Bedeckungsgrad für die erste SCR-Katalysatorkonfiguration (260) erreicht worden ist.

22. SCR-System nach einem der Ansprüche 12 bis 21, wobei die erste SCR-Katalysatorkonfiguration (260) eine SCR-Katalysatoreinrichtung und ein Filter mit einer SCR-Beschichtung aufweist.

23. SCR-System nach einem der Ansprüche 12 bis 22, wobei die zweite SCR-Katalysatorkonfiguration (265) eine SCR-Katalysatoreinrichtung und einen Sperrkatalysator aufweist.

24. SCR-System nach einem der Ansprüche 12 bis 23, wobei mindestens entweder die erste SCR-Katalysatorkonfiguration (260) oder die zweite SCR-Katalysatorkonfiguration (265) ein Vanadiumsubstrat aufweist.

25. Kraftfahrzeug (100; 110), das ein SCR-System nach einem der Ansprüche 12 bis 24 aufweist.

26. Kraftfahrzeug (100; 110) nach Anspruch 25, wobei das Kraftfahrzeug entweder ein Lastkraftwagen, ein Bus oder ein Personenkraftwagen ist.

27. Computerprogramm (P) zum Steuern der Reinigung des Abgases in einem Abgasstrom aus einem Verbrennungsmotor (230) mittels eines Reduktionsmittels in einem SCR-System, das zwei SCR-Katalysatorkonfigurationen (260, 265) mit einer ersten SCR-Katalysatorkonfiguration (260) und einer zweiten SCR-Katalysatorkonfiguration (265) aufweist, die im Abgasstrom in Reihe angeordnet sind, wobei das Computerprogramm (P) einen Programmcode aufweist, der eine elektronische Steuereinheit (200; 500) oder einen anderen mit der elektronischen Steuereinheit (200; 500) verbundenen Computer (210; 500) veranlasst, die Schritte nach einem der Ansprüche 1 bis 11 auszuführen.

28. Computerprogrammprodukt mit einem Programmcode, der zur Ausführung der Verfahrensschritte nach einem der nach einem der Ansprüche 1 bis 11 auf einem computerlesbaren Medium gespeichert ist, wenn der Programmcode auf einer elektronischen Steuereinheit (200; 500) oder einem anderen mit der elektronischen Steuereinheit (200; 500) verbundenen Computer (210; 500) ausgeführt wird.

## Revendications

1. Procédé pour, au moyen d'un agent réducteur, purifier des gaz d'échappement dans un flux de gaz d'échappement d'un moteur (230) dans un système à réduction catalytique sélective SCR comprenant deux configurations de catalyseur à réduction catalytique sélective SCR (260, 265), comprenant une première configuration de catalyseur SCR (260) et une seconde configuration de catalyseur SCR (265) agencées en série dans ledit flux de gaz d'échappement, ladite seconde configuration de catalyseur SCR (265) étant disposée en aval de ladite première configuration de catalyseur (260), comprenant les étapes :
- déterminer en continu une teneur en ammoniac dans lesdits gaz d'échappement à une position en aval de ladite première configuration de catalyseur SCR (260) et en amont de ladite seconde configuration de catalyseur (265), et
- déterminer en continu une teneur en NOx dans lesdits gaz d'échappement en aval de ladite seconde configuration de catalyseur SCR (265),
**caractérisé en ce qu'**il comprend en outre les étapes :
- effectuer ladite purification partiellement dans un premier état (State 1) comprenant un surdosage manifeste dudit agent réducteur dans ladite première configuration de catalyseur SCR (260) et partiellement dans un deuxième état (State 2) comprenant un sous-dosage manifeste dudit agent réducteur dans ladite première configuration de catalyseur SCR (260), les expressions surdosage et sous-dosage se rapportant à un agent réducteur en quantité dosée conduisant à une relation stoechiométrique entre l'ammoniac et NOx dans lesdits gaz d'échappement qui est respectivement supérieure à 1 et inférieure à 1 ; et
- passer entre ledit premier état (State 1) et ledit deuxième état (State 2), dans lequel un passage dudit premier état (State 1) audit deuxième état (State 2) est effectué en fonction de ladite teneur déterminée en ammoniac et dans lequel un passage dudit deuxième état (State 2) audit premier état (State 1) est effectué en fonction de ladite teneur en NOx dans lesdits gaz d'échappement.

2. Procédé selon la revendication 1, comprenant en outre l'étape :
- effectuer ladite purification dans un troisième état (State 3), dans lequel le dosage dudit agent réducteur dans ladite première configuration de catalyseur SCR (260) se situe entre ledit surdosage et ledit sous-dosage.

3. Procédé selon la revendication 1 ou 2, comprenant en outre l'étape :
- effectuer ladite purification dans un quatrième état (State 4), dans lequel ledit dosage dudit agent réducteur dans ladite première configuration de catalyseur SCR (260) correspond à un sous-dosage extrême, dans lequel un sous-dosage extrême correspond à une relation stoechiométrique entre l'ammoniac et NOx dans lesdits gaz d'échappement gaz qui est sensiblement égale à 0.

4. Procédé selon l'une quelconque des revendications précédentes, comprenant en outre l'étape :
- passer dudit premier état (State 1) audit deuxième état (State 2) lorsque ladite teneur déterminée en ammoniac dans lesdits gaz d'échappement en aval de ladite première configuration de catalyseur SCR (260) dépasse une première valeur de seuil.

5. Procédé selon l'une quelconque des revendications précédentes, comprenant en outre l'étape :
- passer dudit deuxième état (State 2) audit premier état (State 1) lorsque ladite teneur déterminée en NOx dans lesdits gaz d'échappement en aval de ladite seconde configuration de catalyseur SCR (265) dépasse une valeur prédéterminée.

6. Procédé selon l'une quelconque des revendications précédentes, comprenant l'étape :
- passer dudit deuxième état (State 2) audit quatrième état (State 4) lorsque ladite teneur déterminée en ammoniac dans lesdits gaz d'échappement en aval de ladite première configuration de catalyseur SCR (260) dépasse une seconde valeur de seuil.

7. Procédé selon l'une quelconque des revendications précédentes, comprenant l'étape :
- passer dudit premier état (State 1) audit quatrième état (State 4) lorsque ladite teneur déterminée en ammoniac dans lesdits gaz d'échappement en aval de ladite première configuration de catalyseur SCR (260) dépasse une seconde valeur de seuil.

8. Procédé selon l'une quelconque des revendications précédentes, comprenant l'étape :
- passer dudit quatrième état (State 4) audit premier état (State 1) lorsque ladite teneur déterminée en NOx dans lesdits gaz d'échappement en aval de ladite seconde configuration de catalyseur SCR (265) dépasse une valeur prédéterminée.

9. Procédé selon l'une quelconque des revendications précédentes, comprenant l'étape :
- passer dudit troisième état (State 3) audit deuxième état (State 2) lorsque ladite teneur déterminée en ammoniac dans lesdits gaz d'échappement en aval de ladite première configuration de catalyseur SCR (260) dépasse une première valeur de seuil.

10. Procédé selon l'une quelconque des revendications précédentes, comprenant l'étape :
- passer dudit troisième état (State 3) audit premier état (State 1) lorsque ladite teneur déterminée en NOx dans lesdits gaz d'échappement en aval de ladite seconde configuration de catalyseur SCR (265) dépasse une valeur prédéterminée.

11. Procédé selon l'une quelconque des revendications précédentes, comprenant l'étape :
- passer dudit premier état (State 1) audit troisième état (State 3) lorsque ladite teneur déterminée en ammoniac en aval de ladite première configuration de catalyseur SCR (260) est inférieure à une première valeur de seuil et ladite teneur déterminée en NOx en aval de ladite seconde configuration de catalyseur SCR (265) est inférieure à une valeur prédéterminée et un certain degré de couverture d'ammoniac a été atteint pour ladite première configuration de catalyseur SCR.

12. Système SCR pour, au moyen d'un agent réducteur, purifier des gaz d'échappement dans un flux de gaz d'échappement d'un moteur (230) dans un système SCR comprenant deux configurations de catalyseur SCR (260, 265), comprenant une première configuration de catalyseur SCR (260) et une seconde configuration de catalyseur SCR (265) agencées en série dans ledit flux de gaz d'échappement, ladite seconde configuration de catalyseur SCR (265) étant disposée en aval de ladite première configuration de catalyseur (260), comprenant :
- des moyens (270) pour déterminer en continu une teneur en ammoniac dans lesdits gaz d'échappement à une position en aval de ladite première configuration de catalyseur SCR (260) et en amont de ladite seconde configuration de catalyseur (265), et
- des moyens (280) pour déterminer en continu une teneur en NOx dans lesdits gaz d'échappement en aval de ladite seconde configuration de catalyseur SCR (265),
**caractérisé par** :
- des moyens (200 ; 210 ; 500) pour effectuer ladite purification partiellement dans un premier état (State 1) comprenant un surdosage manifeste dudit agent réducteur dans ladite première configuration de catalyseur SCR (260) et partiellement dans un deuxième état (State 2) comprenant un sous-dosage manifeste dudit agent réducteur dans ladite première configuration de catalyseur SCR (260), dans lequel les expressions surdosage et sous-dosage se rapportent à un agent réducteur en quantité dosée conduisant à une relation stoechiométrique entre l'ammoniac et NOx dans lesdits gaz d'échappement qui est respectivement supérieure à 1 et inférieure à 1 ; et
- des moyens (200 ; 210 ; 500) pour passer entre ledit premier état (State 1) et ledit deuxième état (State 2), dans lequel un passage dudit premier état (State 1) audit deuxième état (State 2) est effectué en fonction de ladite teneur déterminée en ammoniac et dans lequel un passage dudit deuxième état (State 2) audit premier état (State 1) est effectué en fonction de ladite teneur en NOx dans lesdits gaz d'échappement.

13. Système SCR selon la revendication 12, comprenant en outre :
- des moyens (200 ; 210 ; 500) pour effectuer ladite purification dans un troisième état (State 3), dans lequel le dosage dudit agent réducteur dans ladite première configuration de catalyseur SCR (260) se situe entre ledit surdosage et ledit sous-dosage.

14. Système SCR selon la revendication 12 ou 13, comprenant en outre :
- des moyens (200 ; 210 ; 500) pour effectuer ladite purification dans un quatrième état (State 4), dans lequel ledit dosage dudit agent réducteur dans ladite première configuration de catalyseur SCR (260) correspond à un sous-dosage extrême, un sous-dosage extrême correspondant à une relation stoechiométrique entre l'ammoniac et NOx dans lesdits gaz d'échappement qui est sensiblement égale à 0.

15. Système SCR selon l'une quelconque des revendications 12 à 14, comprenant en outre :
- des moyens (200 ; 210 ; 500) pour passer dudit premier état (State 1) audit deuxième état (State 2) lorsque ladite teneur déterminée en ammoniac dans lesdits gaz d'échappement en aval de ladite première configuration de catalyseur SCR (260) dépasse une première valeur de seuil.

16. Système SCR selon l'une quelconque des revendications 12 à 15, comprenant en outre :
- des moyens (200 ; 210 ; 500) pour passer dudit deuxième état (State 2) audit premier état (State 1) lorsque ladite teneur déterminée en NOx dans lesdits gaz d'échappement en aval de ladite seconde configuration de catalyseur SCR (265) dépasse une valeur prédéterminée.

17. Système SCR selon l'une quelconque des revendications 12 à 16, comprenant en outre :
- des moyens (200 ; 210 ; 500) pour passer dudit deuxième état (State 2) audit quatrième état (State 4) lorsque ladite teneur déterminée en ammoniac dans lesdits gaz d'échappement en aval de ladite première configuration de catalyseur SCR (260) dépasse une seconde valeur de seuil.

18. Système SCR selon l'une quelconque des revendications 12 à 17, comprenant en outre :
- des moyens pour passer dudit premier état (State 1) audit quatrième état (State 4) lorsque ladite teneur déterminée en ammoniac dans lesdits gaz d'échappement en aval de ladite première configuration de catalyseur SCR (260) dépasse une seconde valeur de seuil.

19. Système SCR selon l'une quelconque des revendications 12 à 18, comprenant en outre :
- des moyens (200 ; 210 ; 500) pour passer dudit troisième état (State 3) audit deuxième état (State 2) lorsque ladite teneur déterminée en ammoniac dans lesdits gaz d'échappement en aval de ladite première configuration de catalyseur SCR (260) dépasse une première valeur de seuil.

20. Système SCR selon l'une quelconque des revendications 12 à 19, comprenant en outre :
- des moyens (200 ; 210 ; 500) pour passer dudit troisième état (State 3) audit premier état (State 1) lorsque ladite teneur déterminée en NOx dans lesdits gaz d'échappement en aval de ladite seconde configuration de catalyseur SCR (265) dépasse une valeur prédéterminée.

21. Système SCR selon l'une quelconque des revendications 12 à 20, comprenant en outre :
- des moyens (200 ; 210 ; 500) pour déterminer un degré de couverture de l'ammoniac de ladite première configuration de catalyseur SCR (260) ; et
- des moyens (200 ; 210 ; 500) pour passer dudit premier état (State 1) audit troisième état (State 3) lorsque ladite teneur déterminée en ammoniac en aval de ladite première configuration de catalyseur SCR (260) est inférieure à une première valeur de seuil et ladite teneur déterminée en NOx en aval de ladite seconde configuration de catalyseur SCR (265) est inférieure à une valeur prédéterminée et un certain degré de couverture d'ammoniac a été atteint pour ladite première configuration de catalyseur SCR (260).

22. Système SCR selon l'une quelconque des revendications 12 à 21, dans lequel ladite première configuration de catalyseur SCR (260) comprend un dispositif de catalyseur à réduction catalytique sélective SCR et un filtre revêtu d'un revêtement à réduction catalytique sélective SCR.

23. Système SCR selon l'une quelconque des revendications 12 à 22, dans lequel ladite seconde configuration de catalyseur SCR (265) comprend un dispositif de catalyseur à réduction catalytique sélective SCR et un catalyseur de dégagement d'ammoniac.

24. Système SCR selon l'une quelconque des revendications 12 à 23, dans lequel au moins l'une desdites première configuration de catalyseur SCR (260) et seconde configuration de catalyseur SCR (265) comprend un substrat de vanadium.

25. Véhicule à moteur (100; 110) comprenant un système SCR selon l'une quelconque des revendications 12 à 24.

26. Véhicule à moteur (100 ; 110) selon la revendication 25, lequel le véhicule est l'un quelconque parmi un camion, un bus ou une voiture de tourisme.

27. Programme informatique (P) pour commander, au moyen d'un agent réducteur, un procédé de purification de gaz d'échappement dans un flux de gaz d'échappement d'un moteur (230) dans un système à réduction catalytique sélective SCR comprenant deux configurations de catalyseur à réduction catalytique sélective SCR (260, 265) agencées en série dans ledit flux de gaz d'échappement, dans lequel ledit programme informatique (P) comprend un code de programme pour amener une unité de commande électronique (200 ; 500) ou un autre ordinateur (210 ; 500) connecté à l'unité de commande électronique (200 ; 500) à effectuer les étapes selon l'une quelconque des revendications 1 à 11.

28. Produit de programme informatique contenant un code de programme stocké sur un support lisible par ordinateur pour effectuer des étapes de procédé selon l'une quelconque des revendications 1 à 11, lorsque ledit programme informatique est exécuté sur une unité de commande électronique (200 ; 500) ou un autre ordinateur (210 ; 500) connecté à l'unité de commande électronique (200 ; 500).
